# EUROPEAN PATENT APPLICATION

(11) **EP 4 123 799 A1**
(43) Date of publication of application: **25.01.2023**
(21) Application number: 21771711.5
(22) Date of filing: 25.02.2021
(51) Int. Cl.: H01M 50/152, H01M 50/342, H01M 50/578

(54) **CYLINDRICAL BATTERY**

(30) Priority: 16.03.2020 JP 2020044895
(71) Applicant: SANYO Electric Co., Ltd., Daito-shi Osaka 574-8534 (JP)
(72) Inventor: YAMASHITA, Keisuke, Osaka 540-6207 (JP)
(74) Representative: Novagraaf International SA
(86) International application number: PCT/JP2021/007184
(87) International publication number: WO 2021/187045

(57) **Abstract**

The objective of the present disclosure is to provide a cylindrical battery with which it is possible to reduce the number of components of a sealing body having the two safety functions of current interruption and exhaust. A cylindrical battery according to one embodiment of the present disclosure has a bottomed cylindrical outer casing can (20), and a sealing body (30) that closes the opening of the outer casing can (20). The sealing body (30) has: a rupture plate (31) in which an annular thin section (31A) is formed; and an annular insulation plate (32) positioned on the inner-surface side of the rupture plate (31) so as to face the thin section (31A). The rupture plate (31) includes a valve part (31B) surrounded by the thin section (31A), the valve part (31B) including a latching part (31D) that extends toward the radially outer side of the rupture plate (31) so as to cover at least the inner peripheral part of the inner surface of the insulation plate (32).

## Description

### TECHNICAL FIELD

The present invention generally relates to a cylindrical battery.

### BACKGROUND ART

A cylindrical battery comprises a bottomed cylindrical exterior housing can that houses an electrode assembly and an electrolyte, and a sealing assembly that seals an opening of the exterior housing can (for example, PATENT LITERATURE 1). In the sealing assembly of the above-described cylindrical battery, a rupture disk and an internal terminal plate are stacked with an insulating plate interposed therebetween, and the rupture disk and the internal terminal plate are joined to each other by welding to thereby form a current pathway inside the sealing assembly. In the sealing assembly, if an internal pressure of the cylindrical battery increases in an abnormal case, the rupture disk is deformed, and the internal terminal plate breaks, resulting in cutting off of the current pathway, and if the internal pressure further increases, the rupture disk ruptures, resulting in formation of a venting port for gas within the cylindrical battery. That is, the sealing assembly has two safety functions of current interruption and gas venting.

### CITATION LIST

### PATENT LITERATURE

PATENT LITERATURE 1: International Publication No. WO 2016/157749

### SUMMARY

### TECHNICAL PROBLEM

The sealing assembly is comprised of a plurality of components made of metal and resin. Each component constituting the sealing assembly is required to have a complicated and highly accurate shape to gradually actuate the above-described current interruption and gas venting. Each component having a complicated and highly accurate shape leads to an increase in processing cost. It is necessary to reduce the number of components of the sealing assembly to reduce a manufacturing cost of the cylindrical battery.

It is an advantage of the present disclosure to provide a cylindrical battery that can reduce the number of components of a sealing assembly having safety functions of current interruption and gas venting.

### SOLUTION TO PROBLEM

The cylindrical battery of an aspect of the present disclosure is a cylindrical battery comprising: an electrode assembly in which a positive electrode and a negative electrode are wound with a separator interposed between the positive electrode and the negative electrode; an electrolyte; a bottomed cylindrical exterior housing can that houses the electrode assembly and the electrolyte; and a sealing assembly that seals an opening of the exterior housing can, wherein the sealing assembly has a rupture disk in which an annular thin part is formed, and an annular insulating plate that is disposed in an inner face side of the rupture disk to face the thin part, the rupture disk includes a vent part surrounded by the thin part, and the vent part includes an engaging part that extends toward an outer side in a radial direction of the rupture disk to cover at least an inner peripheral portion of an inner surface of the insulating plate.

### ADVANTAGEOUS EFFECTS OF INVENTION

According to an aspect of the present disclosure, there can be reduced the number of components of a sealing assembly having safety functions of current interruption and gas venting.

### BRIEF DESCRIPTION OF DRAWINGS

FIG. 1 is a sectional view of a cylindrical battery of an example of an embodiment.
FIG. 2 is a sectional view of a sealing assembly of an example of an embodiment.
FIG. 3 is a sectional view of the sealing assembly of an example of an embodiment at a time of current interruption.

### DESCRIPTION OF EMBODIMENTS

Hereinafter, embodiments of the present disclosure will be described with reference to the drawings. The shapes, materials, and numbers described below are examples for explanation, and may be appropriately modified with specifications of cylindrical batteries. Hereinafter, similar elements will be represented by the same reference signs in all drawings and described accordingly.

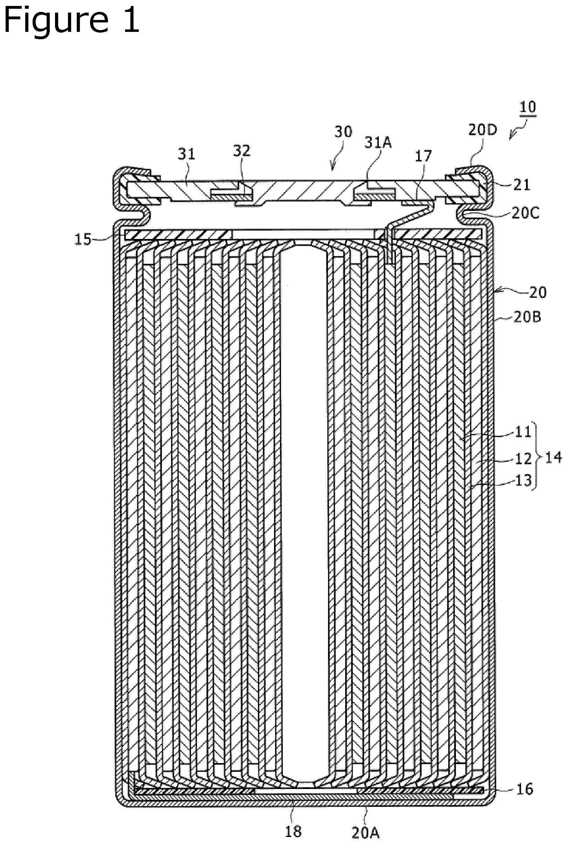

A cylindrical battery 10 of an example of an embodiment, will be described with reference to FIG. 1. FIG. 1 is a sectional view of the cylindrical battery 10.

As illustrated in FIG. 1, the cylindrical battery 10 comprises an electrode assembly 14, an electrolyte, an exterior housing can 20 that houses the electrode assembly 14 and the electrolyte, and a sealing assembly 30 that seals an opening of the exterior housing can 20. The electrode assembly 14 includes a positive electrode 11, a negative electrode 12, and a separator 13, and has a wound structure in which the positive electrode 11 and the negative electrode 12 are spirally wound with the separator 13 interposed therebetween. Hereinafter, for convenience of description, the sealing assembly 30 side (an opening side of the exterior housing can 20) of the cylindrical battery 10 will be described as "the upper side," and a bottom face part 20A side of the exterior housing can 20 will be described as "the lower side."

The positive electrode 11 has a positive electrode core, and a positive electrode mixture layer formed on at least one face of the core. For the positive electrode core, there can be used a foil of a metal such as aluminum or an aluminum alloy, which is stable in a potential range of the positive electrode 11, a film in which such a metal is provided on a surface layer thereof, and the like. The positive electrode mixture layer includes a positive electrode active material, a conductive agent such as acetylene black, and a binder such as polyvinylidene fluoride, and is preferably formed on each side of the positive electrode core. For the positive electrode active material, there is used, for example, a lithium-transition metal composite oxide. The positive electrode 11 can be manufactured by applying a positive electrode mixture slurry including a positive electrode active material, a conductive agent, a binder, and the like on the positive electrode core, drying the resulting coating film, and then compressing it to form a positive electrode mixture layer on each side of the core.

The negative electrode 12 has a negative electrode core, and a negative electrode mixture layer formed on at least one face of the core. For the negative electrode core, there can be used a foil of a metal such as copper or a copper alloy, which is stable in a potential range of the negative electrode 12, a film in which such a metal is provided on a surface layer thereof, and the like. The negative electrode mixture layer includes a negative electrode active material and a binder such as styrene-butadiene rubber (SBR), and is preferably formed on each side of the negative electrode core. For the negative electrode active material, there is used, for example, graphite, a silicon-containing compound, or the like. The negative electrode 12 can be manufactured by applying a negative electrode mixture slurry including a negative electrode active material, a binder, and the like on the negative electrode core, drying the resulting coating film, and then compressing it to form a negative electrode mixture layer on each side of the core.

For the electrolyte, a non-aqueous electrolyte is used, for example. The non-aqueous electrolyte includes a non-aqueous solvent, and an electrolyte salt dissolved in the non-aqueous solvent. For the non-aqueous solvent, there can be used esters, ethers, nitriles, amides, a mixed solvent containing at least two of those mentioned above, and the like. The non-aqueous solvent may also contain a halogen substitute in which at least a part of hydrogen of these solvents is substituted with a halogen atom such as fluorine. Note that the non-aqueous electrolyte is not limited to a liquid electrolyte, but may be a solid electrolyte. For the electrolyte salt, there is used, for example, a lithium salt such as LiPF₆. The kind of the electrolyte is not limited to a particular kind of electrolyte, but may also be an aqueous electrolyte.

The cylindrical battery 10 has insulating plates 15 and 16 arranged on the upper and lower sides of the electrode assembly 14, respectively. In the example illustrated in FIG. 1, a positive electrode lead 17 connected to the positive electrode 11 extends to the sealing assembly 30 side through a through hole of the insulating plate 15, and a negative electrode lead 18 connected to the negative electrode 12 extends to the bottom face part 20A side of the exterior housing can 20 along the outside of the insulating plate 16. The positive electrode lead 17 is connected, by welding or the like, to a bottom face of a flange part 31C (which will be described later) of a rupture disk 31 forming the sealing assembly 30, and the rupture disk 31 serves as a positive electrode external terminal. The negative electrode lead 18 is connected, by welding or the like, to an inner face of the bottom face part 20A of the exterior housing can 20, and the exterior housing can 20 serves as a negative electrode external terminal.

As described above, the cylindrical battery 10 has the exterior housing can 20, and the sealing assembly 30 that seals the opening of the exterior housing can 20. The exterior housing can 20 is a bottomed cylindrical metallic container including the bottom face part 20A and a lateral face part 20B. The bottom face part 20A has a disk shape, and the lateral face part 20B is formed into a cylindrical shape along an outer peripheral edge of the bottom face part 20A. The sealing assembly 30 has the rupture disk 31 fixed by crimping to the opening of the exterior housing can 20 with the gasket 21 interposed between the exterior housing can 20 and the rupture disk 31.

The rupture disk 31 is supported by a grooved part 20C of the exterior housing can 20, and is fixed by crimping by a crimping part 20D of the exterior housing can 20. The grooved part 20C is formed into an annular shape along the circumferential direction of the exterior housing can 20 to have a part of its lateral face part 20B configured to project to the inside in the vicinity of the opening of the exterior housing can 20. The crimping part 20D is formed into an annular shape along the circumferential direction of the exterior housing can 20 at the opening end.

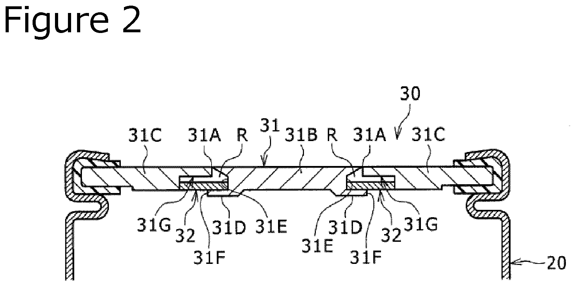

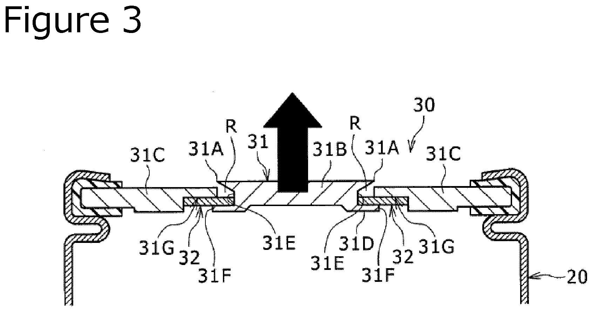

The sealing assembly 30 will be described in detail with reference to FIGS. 2 and 3. FIG. 2 is a sectional view of the sealing assembly 30, and FIG. 3 is a sectional view of the sealing assembly 30 at a time of current interruption.

The sealing assembly 30 is a member that seals the opening of the exterior housing can 20 as described above. The sealing assembly 30 has a function of cutting of the current pathway in the cylindrical battery 10 if an internal pressure of the cylindrical battery 10 increases in an abnormal case of the cylindrical battery 10, and a function of venting gas within the cylindrical battery 10 if the internal pressure further increases. As illustrated in FIG. 2, the sealing assembly 30 has the rupture disk 31 in which an annular thin part 31A is formed, and an annular insulating plate 32 that is disposed in an inner face side (bottom face side) of the rupture disk 31 to face the thin part 31A.

The rupture disk 31 includes a vent part 31B that is formed on an inner side in a radial direction of the rupture disk 31 with respect to the thin part 31A, and the flange part 31C that is formed on an outer side in the radial direction of the rupture disk 31 with respect to the thin part 31A. The vent part 31B includes an engaging part 31D that extends toward an outer side in the radial direction of the rupture disk 31 to cover an inner peripheral portion of the bottom face of the insulating plate 32.

Next, actuations of the current interruption and gas venting of the sealing assembly 30 will be described in detail. As illustrated in FIG. 3, if an internal pressure of the cylindrical battery 10 increases in the abnormal case of the cylindrical battery 10, the rupture disk 31 is pushed upward by the internal pressure. At this time, the insulating plate 32 receives a force pushing itself upward from the engaging part 31D, whereby an outer face (upper face) and an inner face (lower face) of the insulating plate 32 is brought in close contact with a step face 31G and the engaging part 31D, respectively. This enables the cylindrical battery 10 to be maintained in a hermetically sealed state even if a part of the thin part 31A ruptures, which causes further increase in the internal pressure, resulting in complete separation of the vent part 31B from the flange part 31C. Electrical connection between the vent part 31B and the flange part 31C is prevented by the insulating plate 32, resulting in cutting off of the current pathway between the vent part 31B and the flange part 31C. Note that it is sufficient if the hermetically sealed state of the cylindrical battery 10 at the time of rupture of the thin part 31A is ensured to such a degree that the internal pressure increases so that the vent part 31B can be completely separated from the flange part 31C.

When the internal pressure of the cylindrical battery 10 further increases after cutting off of the current pathway, at least one of the engaging part 31D and the insulating plate 32 is deformed or ruptures or breaks, and the vent part 31B is blown off, whereby a venting port is formed in the rupture disk 31. Gas within the cylindrical battery 10 is vented from the venting port.

The rupture disk 31 is formed into a substantial disk shape in plan view, and is produced by pressing a plate material made of, for example, aluminum or an aluminum alloy.

The thin part 31A is a part that ruptures in the rupture disk 31 if the internal pressure of the cylindrical battery 10 increases in the abnormal case of the cylindrical battery 10. The thin part 31A is formed into an annular shape in plan view. The thin part 31A is formed into a U shape or a V shape in a cross sectional view.

The vent part 31B is formed into a substantial disk shape surrounded by the thin part 31A. The vent part 31B includes the engaging part 31D that is formed in a lower end, and a lateral peripheral face 31E.

The flange part 31C is a part that is supported by the grooved part 20C of the exterior housing can 20, and that is fixed by crimping by the crimping part 20D of the exterior housing can 20. The above-described positive electrode lead 17 is connected, by welding or the like, to a bottom face of the flange part 31C.

The engaging part 31D extends toward the outer side in the radial direction of the rupture disk 31 to cover the inner face of the insulating plate 32. The engaging part 31D is not required to cover the entire inner face of the insulating plate 32, but preferably covers at least an inner peripheral portion in the inner face of the insulating plate 32. Therefore, the engaging part 31D is preferably formed into an annular shape around the lateral peripheral part 31E in plan view. This can suppress gas venting from between the inner face of the insulating plate 32 and the engaging part 31D at the time of rupture of the thin part 31A.

To ensure the hermetically sealed state of the cylindrical battery 10 at the time of rupture of the thin part 31A, the engaging part 31D is more preferably formed so that a tip face 31F at the outer side in the radial direction of the engaging part 31D is located on the outer side in the radial direction with respect to the thin part 31A.

The step face 31G is brought in close contact with the outer face of the insulating plate at the time of rupture of the thin part 31A. This can suppress gas venting from between the outer face of the insulating plate 32 and the step face 31G at the time of rupture of the thin part 31A. The step face 31G is formed by cutting the inner peripheral side of the bottom face part of the flange part 31C into an annular shape. It is sufficient if the step face 31G has a function of suppressing gas venting from between the outer face of the insulating plate and the rupture disk 31 at the time of rupture of the thin part 31A, and a step is not necessarily provided between the flange part 31C and the step face 31G.

The insulating plate 32 is formed into an annular shape in plan view. The insulating plate 32 is disposed with a gap provided among the upper face of the insulating plate 32, the bottom face of the thin part 31A and the step face 31G of the flange part 31C. The gap is not necessarily required. From the standpoint of ensuring the hermetically sealed state of the cylindrical battery 10 at the time of rupture of the thin part 31A, the lateral peripheral part 31E is preferably press fitted into the opening of the insulating plate 32.

According to the cylindrical battery 10, the number of components of the sealing assembly 30 can be reduced while maintaining the safety functions of current interruption and gas venting using the rupture disk 31 and the insulating plate 32. For example, the internal terminal plate can be eliminated as compared with the conventional sealing assembly in which the insulating plate is interposed between the rupture disk and the internal terminal plate. This can reduce the manufacturing cost of the sealing assembly 30.

According to the cylindrical battery 10, the number of weld portions can be reduced and the manufacturing step of welding can be reduced as compared with the conventional sealing assembly in which the rupture disk and the internal terminal plate are joined by welding to form the current pathway, for example. This can reduce the manufacturing cost of the sealing assembly 30.

Furthermore, according to the cylindrical battery 10, the thickness of the sealing assembly 30 can be reduced while maintaining the safety functions of current interruption and gas venting. This can increase a volume occupied by the electrode assembly 14 inside the cylindrical battery 10 and can increase the energy density of the cylindrical battery 10.

Note that the present invention is not limited to the above embodiment and modified example, and various changes and improvements are possible within the matters described in the claims of the present application. For example, in the present embodiment, the rupture disk 31 disposed at the outermost part of the sealing assembly 30 serves as the positive electrode external terminal, but the present invention is not limited to this configuration. For example, a configuration may be adopted in which a cap is disposed at the outermost part of the sealing assembly 30 so that the cap serves as the positive electrode external terminal.

### EXAMPLES

The present disclosure will be further described below with Examples, but the present disclosure is not limited to these Examples.

### <Example>

### [Production of Sealing Assembly]

A rupture disk was produced by pressing a plate material of aluminum. A thin part having a substantially annular shape was formed at a center part of the rupture disk, and an inner side in a radial direction of the thin part served as a vent part, and an outer side in the radial direction of the thin part served as a flange part. An annular engaging part was formed at a lower end of the vent part along a lateral peripheral part. A step face was formed at an inner side in a radial direction of an inner face of the flange part. A sealing assembly was produced by press-fitting the lateral peripheral face of the vent part into a substantially annular insulating plate made of a polymer resin so that the insulating plate faced the thin part.

### <Comparative Example>

A sealing assembly was produced in the same manner as in Example except that the engaging part was not formed at the lower end of the vent part.

### [Measurement of Actuation Pressure]

The sealing assemblies of Example and Comparative Example were prepared and actuation pressures for a current interrupt device and a venting mechanism were measured. The sealing assembly was fixed to a test device so that nitrogen gas was supplied from an inner face side (lower face side) of the sealing assembly. At this time, a sealed space was formed by the inner face of the sealing assembly and a supply pathway of the nitrogen gas. Then, the nitrogen gas was supplied to the inner face side of the sealing assembly, and there were measured the actuation pressure (current interrupt pressure) at the time of cutting off of the current pathway between the vent part and the flange part and the actuation pressure (venting pressure) at the time of formation of the venting port. The results are summarized in Table 1.

**[Table 1]**

| | Example | Comparative Example |
|---|---|---|
| Current interrupt pressure | 2.5 MPa | No current interruption |
| Venting pressure | 3.0 MPa | 2.5 MPa |

In Example, the current interrupt pressure and the venting pressure were 2.5 MPa and 3.0 MPa, respectively. That is, when the internal pressure of the battery reached 2.5 MPa, the vent part was completely separated from the flange part, resulting in cutting off of the current pathway, and the sealing property of the battery was subsequently maintained until the internal pressure reached 3.0 MPa. Then, when the internal pressure reached 3.0 MPa, the vent part was blown off, whereby a venting port was formed. That is, it is found that the hermetically sealed state of the battery was maintained from the time of rupture of the thin part until the time of the formation of the venting port.

On the other hand, in Comparative Example, only the porting pressure of 2.5 MPa was measured, but the current interrupt pressure was not measured. That is, in Comparative Example, since the engaging part was not formed, the battery was not in the hermetically sealed state when a part of the thin part ruptured, and gas within the battery was vented without the vent part completely separated from the flange part.

From the above result, it is found that the sealing assembly can achieve the safety functions of the current interruption and gas venting by providing the engaging part as in Example.

### REFERENCE SIGNS LIST

10 Cylindrical battery, 11 Positive electrode, 12 Negative electrode, 13 Separator, 14 Electrode assembly, 15 Insulating plate, 16 Insulating plate, 17 Positive electrode lead, 18 Negative electrode lead, 20 Exterior housing can, 20A Bottom face part, 20B Lateral face part, 20C Grooved part, 20D Crimping part, 21 Gasket, 30 Sealing assembly, 31 Rupture disk, 31A Thin part, 31B Vent part, 31C Flange part, 31D Engaging part, 31E Lateral peripheral face, 31F Tip face, 31G Step face, 32 Insulating plate

## Claims

1. A cylindrical battery comprising:
an electrode assembly in which a positive electrode and a negative electrode are wound with a separator interposed between the positive electrode and the negative electrode;
an electrolyte;
a bottomed cylindrical exterior housing can that houses the electrode assembly and the electrolyte; and
a sealing assembly that seals an opening of the exterior housing can,
wherein the sealing assembly has a rupture disk in which an annular thin part is formed, and an annular insulating plate that is disposed in an inner face side of the rupture disk to face the thin part,
the rupture disk includes a vent part surrounded by the thin part, and
the vent part includes an engaging part that extends toward an outer side in a radial direction of the rupture disk to cover at least an inner peripheral portion of an inner surface of the insulating plate.

2. The cylindrical battery according to claim 1, wherein
a tip position of the engaging part is located on the outer side in the radial direction of the rupture disk with respect to the thin part.
